# EUROPEAN PATENT SPECIFICATION

(11) **EP 4 646 096 B1**
(45) Date of publication and mention of the grant of the patent: **17.06.2026**
(21) Application number: 24795300.3
(22) Date of filing: 23.10.2024
(51) Int. Cl.: A01G 9/14

(54) **GREENHOUSE AND A METHOD OF PERFORMING CLEANING, MAINTENANCE OR CONSTRUCTION WORK ON THE RESPECTIVE GREENHOUSE**
GEWÄCHSHAUS UND VERFAHREN ZUR DURCHFÜHRUNG VON REINIGUNGS-, WARTUNGS- ODER BAUARBEITEN AN DEM ENTSPRECHENDEN GEWÄCHSHAUS
SERRE ET PROCÉDÉ DE RÉALISATION D'UN TRAVAIL DE NETTOYAGE, D'ENTRETIEN OU DE CONSTRUCTION SUR LA SERRE CORRESPONDANTE

(30) Priority: 23.10.2023 LU 505338; 23.10.2023 US 202363592288 P
(43) Date of publication of application: 12.11.2025
(73) Proprietor: Rovero Systems B.V., 4941 VW Raamsdonksveer (NL)
(72) Inventor: BRANSEN, Roy, 4941 VW Raamsdonksveer (NL); GABRIELS, Jacobus Cornelius, 4941 VW Raamsdonksveer (NL)
(74) Representative: Wittop Koning, Tom Hugo
(86) International application number: PCT/NL2024/050579
(87) International publication number: WO 2025/089947

(56) References cited:
- DE-A1- 102013 112 717
- FR-B1- 2 893 057
- KR-A- 20180 028 794
- SU-A1- 1 636 548
- US-B1- 11 343 977

## Description

The invention relates to a greenhouse, comprising a gable roof, the gable roof comprising a roof frame including two gutter profiles and a ridge profile extending parallel to each other, wherein the gutter profiles are located at either side of and below the ridge profile, defining two opposite inclined roof surfaces, the greenhouse further comprising a plurality uprights, the top portion thereof being fixedly connected with lattice beams that extend perpendicular to the ridge profile, the uprights and lattice beams supporting the roof frame, and an interior roof space being defined as the space limited by the roof frame and the lattice beams, and to a method performing maintenance and construction work in the interior roof space of such a greenhouse.

Such greenhouses are known in the art, such as wide-span greenhouses, and e.g. "Venlo-type" greenhouses, both having a so-called A-frame as defined above. Venlo-type greenhouses have a span width of 3 - 5 metres whereas the broad span greenhouse has widths of 9 - 13 metres or even more. The height of the gutters for Venlo-type greenhouses is usually 4 to 7 metres, for wide-span greenhouses this is usually 4 - 6 metres. The height of the ridge is however significantly more for a wide-span greenhouse as compared to a Venlo-type greenhouse with the same gutter height. As a result, the wide-span greenhouses have more internal space, which is beneficial for the climate within the greenhouse. In particular in wide-span greenhouses, the distance between the lattice beams and the ridge profile is rather high, i.e., 2 metres or more. Both wide-span and Venlo-type greenhouses can be covered by glass or by a plastic foil, such as polyethylene, polypropylene or EFTE (ethylene-tetrafluoro-ethylene).

For cleaning, maintenance and construction work in the interior roof space, e.g. on the roof frame or additional construction elements such as glass and foil covers, working staff members either work from the exterior of the greenhouse, which is dangerous and dependent on weather conditions, using special cranes, as e.g. described in FR2893057. In case the work needs to be done from the interior, aerial platforms are used that are driven into the greenhouse. DE102013112717 describes such an aerial platform with wheels moving over the ground surface of the interior of the greenhouse. For such an aerial platform to be properly installed within the greenhouse, the greenhouse needs to be locally cleared from objects and growing plants etcetera. This is cumbersome and has great impact on the growth processes within the greenhouse. KR20180028794A describes a greenhouse of the above type, comprising a walkway structure extending below the ridge to provide a walking surface allowing maintenance personnel to perform maintenance work in the ridge area while standing on and walking over the walking surface. Although such a walkway structure avoids the problems of the above-described aerial platforms, the problem of the walkway of KR20180028794A is that the maintenance personnel, while working on the walking surface, need to walk over the surface while carrying equipment, which is cumbersome in particular when the greenhouse is of a considerable length. Further, carrying of equipment over the walkway can have the risk of dropping the equipment or falling therefrom.

The invention now provides a solution to this problem in that the greenhouse further comprises, in the interior roof space, one or more rail elements, extending parallel to the ridge element, being configured to enable a mobile working platform to be moved in longitudinal direction over the said rail elements within the interior roof space parallel to the ridge element from one end face of the greenhouse to the opposing end face, allowing one or more working staff members to be positioned thereon.

By the provision of such rail elements, a mobile working platform, or trolly, can be placed on the one or more rail elements and be moved over the rail elements in longitudinal direction, i.e. from the one end face of the greenhouse to the opposing end face, therewith enabling one or more working staff members to conveniently reach within the interior roof space of the greenhouse, e.g. for performing cleaning, repair or maintenance work on windows, glass or foil repair etcetera, without the need to walk and carry equipment. By such arrangement, there is no need for having an aerial platform that is standing on the ground, and all processes within the greenhouse can continue undisturbed. Accordingly, the interior roof space is defined as the space limited by the roof frame and the lattice beams between the said end faces.

The one or more rail elements preferably provide a continuous rail track, extending from the one end face of the greenhouse to the opposing end face, enabling a mobile platform to move over the said rail track between both end faces in a continuous manner, and without obstacles. To this end, the mobile working platform preferably has wheels that engage with the rails, e.g. designed as a trolly, capable of moving over the rail elements.

Greenhouses comprising longitudinally extending rail elements are known from US11,343,977. The greenhouse of US11,343,977 comprises a number of inverted U-shaped gantries, which are suspended from can rails 402 and can slide relative to fixed truss elements. A curtain is attached between a truss and such a sliding gantry. When the gantry slides away from the truss, the curtain closes. Rail elements extend between two adjacent trusses, carrying a curtain that on one side is fixed to the truss and on the other side to the gantry, that can be moved from the said truss to the adjacent truss in order to open and close the curtain. The curtains and gantries extend from the rail elements downward, without being present in the interior roof space. Further, the rail elements do not allow for a continuous movement from the one end face of the greenhouse to the opposite end face within the interior roof space, but allows limited movement of a truss between two adjacent gantries only. The rail elements are not designed, nor suitable to carry a mobile working platform.

In the greenhouse of the invention, the one or more rail elements are preferably mounted on the lattice beams. In A-type greenhouses, lattice beams extend horizontally over the lateral width, perpendicular to the ridge profiles, rendering these lattice beams an optimal support for mounting rail elements on, allowing the rail elements to extend over the complete length of the greenhouse, i.e. from the one end face to the opposed end face of the green house, in the interior roof space of the greenhouse.

In an attractive embodiment, the interior roof space comprises two rail elements below on either side of the ridge element and parallelly extending thereto. Such an arrangement of the rail elements allows a mobile working platform to be carried by and to move over two rails, contributing to the stability of the construction. Further, such arrangement allows positioning of the mobile working platform under the ridge element to provide optimal reach for a working staff member within the interior roof space.

Attractively, the greenhouse further comprises a mobile working platform engaged with the one or more rail elements so as be supported by and be moveable over the said rail elements. In a greenhouse construction where a plurality of ridge and gutter profiles are arranged parallel to one another, rail elements can be present in each interior roof space defined thereby. A single mobile working platform can be removed from one pair of rail elements below a ridge profile and be placed on other rail elements extending parallel under another ridge profile, but it is also possible that mobile platforms are provided in each interior roof space, avoiding the necessity to remove the mobile working platform from the one interior roof space to the other. It is also possible to provide a single continuous rail track extending longitudinally below each ridge profile in a plurality of interior roof spaces, e.g., by providing curved rail sections at the end faces of the greenhouse, connecting the rail elements of two adjacent interior roof spaces. Such curves would preferably be a half circle. Since the rail elements are in the interior roof space, it would be necessary to allow the windows above said curved rail sections to be opened down to the gutter element in order to allow the trolly to be moved from the one to the adjacent interior roof space.

The mobile working platform is preferably a wheeled platform, or trolly, where the wheels engage with the rails, allowing the mobile platform to roll over the rail elements.

The invention also provides a method of performing cleaning, maintenance or construction work in the interior roof space of a greenhouse as described above, comprising providing a mobile working platform on the one or more rail elements, for accommodating one or more working staff members on the platform and moving the platform over the one or more rail elements. The platform moves over the rail elements within the interior roof space, and is preferably moved over a rail track, defined by the rail elements, extending from the one end face of the greenhouse to the opposite end face, allowing the platform to be moved therebetween.

The platform can e.g. be driven manually or by a drive motor.

The invention will now be further exemplified by the following figures, wherein:
Figure 1 is a schematic view of a greenhouse of the invention.
Figure 2 is a side view of the greenhouse of figure 1.
Figure 3 is a mobile working platform for performing the method of the invention.

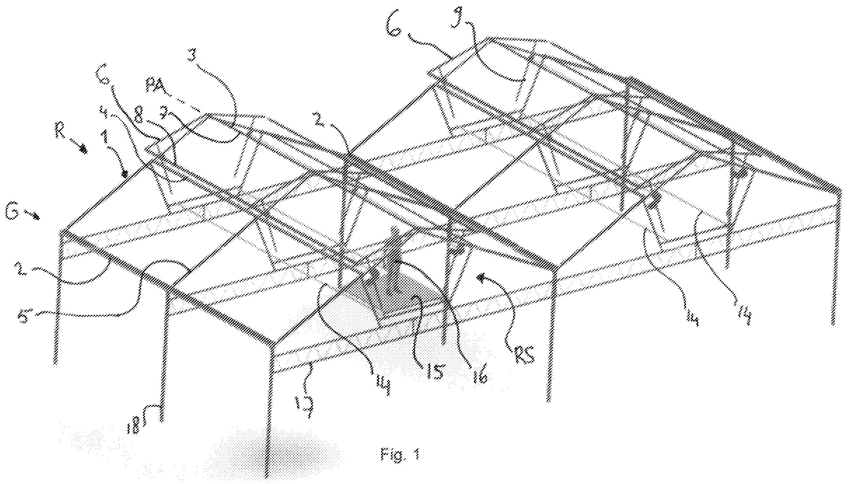

Figure 1 shows two parallelly arranged wide-span greenhouses G, each having a gable roof R, comprising a roof frame 1. The roof frame has an upper ridge profile 3 and a gutter profile 2 at either side thereof at the lower edges of the roof frame, defining two opposite roof surfaces extending from the gutter profile 3 to the gutter profiles 2. The gutter profiles and the ridge profile run in longitudinal direction parallel to one another. At either side of the ridge profile 3, between the gutter profiles 2 and the ridge profile 3, intermediate profiles 4 extend parallel to one another. The gutter profile 2, the ridge profile 3 and the intermediate profile 4 are interconnected through lateral frame beams 5 extending in transverse direction of said profiles 2, 3 and 4. The frame beams define the slope of the roof surface, here about 25° to the horizontal. The roof R also comprises two window profiles 6, located at either side of the ridge profile 3. Each window frame has an upper window profile 7 which is hingeably connected with the roof frame and rotatable with respect to the ridge profile 3 about a pivot axis PA extending in longitudinal direction parallel to the ridge profile 3. Usually, the window frame 6 is directly connected to the ridge profile though hinges mounted on the ridge profile 3 and to the upper window profile 7. The window frame 6 has a lower window profile 8, at a distance of and opposite to the upper window profile 7. The window frame 6 is rotatable between a closed position where the lower window profile 8 lies at the intermediate profile 4 and one or more open positions where the lower window profile 8 lies at a distance from and above the intermediate profile 4. Here, the window frames are slightly opened. Positioning rods 9 are mounted to the window frames 6, allowing to position the window frames in an open position or to in the closed position. Interior roof space RS is defined by the space enclosed between the ridge profile 3, the two gutter profiles 2, and the lattice beams 17, extending between both end faces of the greenhouse.

Further, greenhouse G comprises uprights 18, the top portion thereof being fixedly connected with lattice beams 17 extending substantially horizontally and perpendicular to the ridge profile 3. The uprights 18 and lattice beams 17 support the roof frame 1. Rail elements 14 are mounted on the lattice beams 17, and extend longitudinally from the one end face of the greenhouse to the other. These rail elements carry a working platform 15, that can be moved over the said rail elements 14 within the interior roof space RS. The working platform provides a working space for a working staff member 16, that can reach through the opening between the window frame 6 and the intermediate profile 4 to even perform maintenance or repair work on the outside of the greenhouse, while working from the interior of the greenhouse G, in particular from the interior roof space RS. The working platform 15 allows the working staff member 16 to perform maintenance and repair on the greenhouse G, in particular the roof R, without the need for intervening in the interior space of the greenhouse below the lattice beams, allowing full continuation of the processes taking place therein and without interfering with plant growth etc. Under the adjacent ridge profile, another pair of rail elements 14 are mounted on the lattice beams 17.

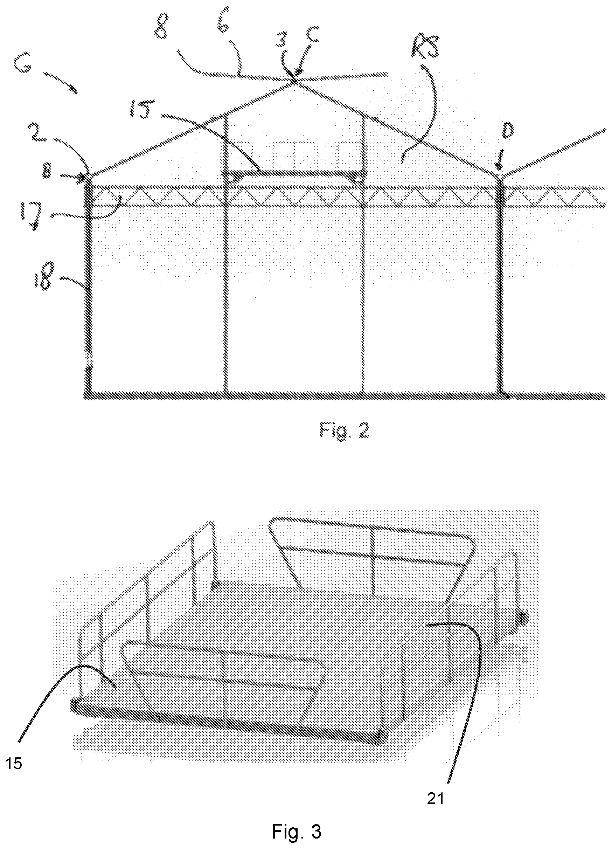

Figure 2 shows a front view of the greenhouse G, wherein the features that have already been described in figure 1 have the same reference numbers. Here, the window frame 6 is opened in a wider opened position, wherein the lower window profile 8 is at a slightly higher position than ridge profile 3. The interior roof space as defined above corresponds with the space between the ridge profile 3 and the two gutter profiles 2, i.e. the space between B, C and D, extending between the two end faces of the greenhouse.

Figure 3 shows an embodiment of a working platform 15 to be moved over the rail elements 14 that extend in longitudinal direction in the interior roof space RS of the greenhouse G, allowing an operator 16 to work from the said mobile working platform 14 to perform construction and maintenance tasks. The mobile working platform 14 is provided with fall protection such as fence elements 21. The mobile working platform 15 can be provided with a driving motor to move back and forth over the rail elements 14.

## Claims

1. Greenhouse (G), comprising a gable roof (R), the gable roof (R) comprising a roof frame (1) including two gutter profiles (2) and a ridge profile (3) extending parallel to each other, wherein the gutter profiles (2) are located at either side of and below the ridge profile (3), defining two opposite inclined roof surfaces, the greenhouse (G) further comprising a plurality uprights (18), the top portion thereof being fixedly connected with lattice beams (17) that extend perpendicular to the ridge profile, the uprights (18) and lattice beams (17) supporting the roof frame (1), and an interior roof space (RS) being defined as the space limited by the roof frame (1) and the lattice beams (17), wherein the greenhouse (G) further comprises, in the interior roof space (RS) one or more rail elements (14), extending parallel to the ridge profile (3), being configured to enable a mobile working platform (15) to be moved in longitudinal direction over the said rail elements (14) within the interior roof space (RS) parallel to the ridge profile (3) from one end face of the greenhouse (G) to the opposing end face, allowing one or more working staff members (16) to be positioned thereon.

2. Greenhouse (G) of claim 1, wherein the one or more rail elements (14) are mounted on the lattice beams (17).

3. Greenhouse (G) of claim 1 or 2, wherein the interior roof space (RS) comprises two rail elements (14) below on either side of the ridge profile (3) and parallelly extending thereto.

4. Greenhouse (G) of any of the preceding claims, further comprising a mobile working platform (15) engaged with the one or more rail elements (14) so as be supported by and to be moveable over the said rail elements (14).

5. Method of performing cleaning, maintenance or construction work in the interior roof space (RS) of a greenhouse (G) according to any of the preceding claims, comprising providing a mobile working platform (15) on the one or more rail elements (14), for accommodating one or more working staff members (16) on the mobile working platform (15) and moving the mobile working platform (15) over the one or more rail elements (14).

## Patentansprüche

1. Gewächshaus (G) mit einem Satteldach (R), wobei das Satteldach (R) einen Dachrahmen (1) umfasst, der zwei parallel zueinander verlaufende Traufprofile (2) und ein Firstprofil (3) aufweist, wobei sich die Traufprofile (2) zu beiden Seiten und unterhalb des Firstprofils (3) befinden, und zwei gegenüberliegende geneigte Dachflächen bilden, wobei das Gewächshaus (G) ferner eine Vielzahl von Stützen (18) umfasst, deren oberer Abschnitt fest mit Gitterträgern (17) verbunden ist, die sich senkrecht zum Firstprofil erstrecken, wobei die Stützen (18) und Gitterträger (17) den Dachrahmen (1) tragen, und wobei ein innerer Dachraum (RS) als der durch den Dachrahmen (1) und die Gitterträger (17) begrenzte Raum definiert ist, wobei das Gewächshaus (G) ferner im inneren Dachraum (RS) ein oder mehrere Schienenelemente (14) umfasst, die sich parallel zum Firstprofil (3) erstrecken, die so ausgebildet sind, dass eine mobile Arbeitsplattform (15) in Längsrichtung über die genannten Schienenelemente (14) innerhalb des inneren Dachraums (RS) parallel zum Firstprofil (3) von einer Stirnseite des Gewächshauses (G) zur gegenüberliegenden Stirnseite bewegt werden kann, wodurch ein oder mehrere Arbeitskräfte (16) darauf positioniert werden können.

2. Gewächshaus (G) nach Anspruch 1, wobei das eine oder die mehreren Schienenelemente (14) an den Fachwerkträgern (17) angebracht sind.

3. Gewächshaus (G) nach Anspruch 1 oder 2, wobei der innere Dachraum (RS) zwei Schienenelemente (14) umfasst, die sich unterhalb auf beiden Seiten des Firstprofils (3) und parallel dazu erstrecken.

4. Gewächshaus (G) nach einem der vorstehenden Ansprüche, das ferner eine mobile Arbeitsplattform (15) umfasst, die mit dem einen oder den mehreren Schienenelementen (14) in Eingriff steht, so dass sie von diesen getragen wird und über die genannten Schienenelemente (14) bewegbar ist.

5. Verfahren zur Durchführung von Reinigungs-, Wartungs- oder Bauarbeiten im inneren Dachraum (RS) eines Gewächshauses (G) gemäß einem der vorstehenden Ansprüche, umfassend das Bereitstellen einer mobilen Arbeitsplattform (15) auf dem einen oder den mehreren Schienenelementen (14), das Aufnehmen eines oder mehrerer Arbeitskräfte (16) auf der mobilen Arbeitsplattform (15) und das Bewegen der mobilen Arbeitsplattform (15) über das eine oder die mehreren Schienenelemente (14).

## Revendications

1. Serre (G) comprenant un toit à deux versants (R), ledit toit à deux versants (R) comprenant une charpente (1) comportant deux profilés de gouttière (2) et un profilé de faîte (3) s'étendant parallèlement les uns aux autres, les profilés de gouttière (2) étant situés de part et d'autre et en dessous du profilé de faîte (3), définissant deux surfaces de toit inclinées opposées, la serre (G) comprenant en outre une pluralité de montants (18), dont la partie supérieure est reliée de manière fixe à des poutres en treillis (17) s'étendant perpendiculairement au profilé de faîte, les montants (18) et les poutres en treillis (17) supportant la charpente de toit (1), et un espace intérieur de toiture (RS) étant défini comme l'espace délimité par la charpente de toiture (1) et les poutres en treillis (17), dans laquelle la serre (G) comprend en outre, dans l'espace intérieur de toiture (RS), un ou plusieurs éléments de rail (14), s'étendant parallèlement au profilé de faîte (3), configurés pour permettre à une plate-forme de travail mobile (15) d'être déplacée dans le sens longitudinal sur lesdits éléments de rail (14) à l'intérieur de l'espace intérieur de toiture (RS) parallèlement au profil de faîte (3), d'une face d'extrémité de la serre (G) à la face d'extrémité opposée, permettant à un ou plusieurs membres du personnel (16) de s'y positionner.

2. Serre (G) selon la revendication 1, dans laquelle le ou les éléments de rail (14) sont montés sur les poutres en treillis (17).

3. Serre (G) selon la revendication 1 ou 2, dans laquelle l'espace intérieur du toit (RS) comprend deux éléments de rail (14) situés en dessous de chaque côté du profilé de faîte (3) et s'étendant parallèlement à celui-ci.

4. Serre (G) selon l'une quelconque des revendications précédentes, comprenant en outre une plate-forme de travail mobile (15) engagée avec le ou les éléments de rail (14) de manière à être supportée par lesdits éléments de rail (14) et à pouvoir se déplacer sur ceux-ci.

5. Procédé pour effectuer des travaux de nettoyage, d'entretien ou de construction dans l'espace intérieur du toit (RS) d'une serre (G) selon l'une quelconque des revendications précédentes, comprenant la mise en place d'une plate-forme de travail mobile (15) sur le ou les éléments de rail (14), pour accueillir un ou plusieurs membres du personnel (16) sur la plate-forme de travail mobile (15) et déplacer la plate-forme de travail mobile (15) sur le ou les éléments de rail (14).
